# EUROPEAN PATENT APPLICATION

(11) **EP 2 031 587 A1**
(43) Date of publication of application: **04.03.2009**
(21) Application number: 08162312.6
(22) Date of filing: 13.08.2008
(51) Int. Cl.: G11B 7/125

(54) **Laser output control device, information recording and reproducing device, and laser output control method**

(30) Priority: 29.08.2007 JP 2007222572
(71) Applicant: Kabushiki Kaisha Toshiba, Minato-ku, Tokyo 105-8001 (JP)
(72) Inventor: Kuroda, Kazuto, Tokyo Tokyo 105-8001 (JP); Usui, Takashi, Tokyo Tokyo 105-8001 (JP)
(74) Representative: Henkel, Feiler & Hänzel

(57) **Abstract**

To solve a new problem which has been produced due to adoption of a recording method using relaxation oscillation, the laser output control device suppresses unnecessary relaxation oscillation while increasing an averaged light quantity between recording pulses to obtain reflected light quantity which is necessary for tracking and focus controlling. A laser modulation control circuit includes a recording pulse output unit (75A) which outputs recording pulses for making relaxation oscillation as the recording pulses, a bias current output unit (75B) which outputs a constant bias current between the recording pulses, and a high-frequency overlap unit (75D) which overlaps the high-frequency signal on the constant bias current between the recording pulses, and controls so as to have times at which current values at a start edge and an end edge of the high-frequency signal are almost consistent with a value of the constant bias current.

## Description

One embodiment of the invention relates to a laser output control device, an information recording and reproducing device, and a laser output control method, which are especially effective in a device for performing sub-nanopulse recording.

As is generally known, as regards an optical disk for storing digital video, a digital versatile disc (DVD) has been widely used in all over the world as storages and distributions (digital work publications) mainly of motion picture content. Compared with the foregoing DVD (referred to as an existing DVD), a disc having larger capacity has been realized.

As regards a recording method of the optical disk disclosed above, a recording method for recording with smaller optical energy by utilizing a sharp pulse with a recording pulse length shorter length than one nanosecond has been developed. This recording method is referred to, for example, as sub-nanopulse recording method or a recording method utilizing relaxation oscillation or a shorten pulse.

With the recording method utilizing the relaxation oscillation, low power consumption may be realized. However, in the case of adaptation of this recording method, it is not clear whether or not information recording and reproducing on the optical disk be performed with sufficient quality. With the utilization of the relaxation oscillation (or pulse), a new problem is produced.

Meanwhile, to reduce a noise from a semiconductor laser in performing information recording and reproducing information from the optical disk, various techniques have been developed as techniques for driving the semiconductor laser.

For instance, to reduce a laser noise in reproduction, a technique for overlapping a high-frequency signal on a laser drive current in reproduction is disclosed (Jpn. Pat. Appln. KOKAI Publication No. 2002-230814).

A method for using a semiconductor drive current with a high-frequency component overlapped thereon also in recording and combining a recording current with the semiconductor laser drive current has been developed (Jpn. Pat. Appln. KOKAI Publication No. 2006-107726).

However, all the techniques mentioned above are techniques which have been applied to a recording method using the conventional pulse strings. These techniques are not ones capable of coping with the problem which newly occurs in the recording method using the relaxation oscillation.

An object of the embodiments of the present invention is to solve a new problem due to adoption of a recording method by use of relaxation oscillation. That is, the object of the embodiments of the invention is to provide a laser output control device, an information recording and reproducing device and a laser output control method which is configured to suppress an occurrence of unnecessary relaxation oscillation while increasing averaged light quantity between recording pulses to sufficiently obtain a reflection light quantity which is necessary for tracking and focus control.

According to one aspect of the present invention, there is provided a laser modulation control circuit which imparts a drive current and a recording pulse to a laser diode, comprising a recording pulse output unit which outputs a recording pulse to make the laser diode generate relaxation oscillation, a bias current output unit which outputs a constant bias current between the recording pulses, and a high-frequency overlap unit which overlaps a high-frequency signal on the constant bias current between the recording pulses. It is controlled so that the control circuit has times at which current values at a start edge and an end edge of the high-frequency signal are almost consistent with a value of the constant bias current.

The invention can be more fully understood from the following detailed description when taken in conjunction with the accompanying drawings, in which:
FIG. 1 is a view depicting an example of a drive current including recording pulses and high-frequency signals and of a non return to zero inversion (NRZI) waveform for explaining an embodiment of the invention;
FIG. 2 is a block diagram of an information recording and reproducing device to which the invention is applied;
FIG. 3 is a view depicting a concrete configuration example of a laser modulation control circuit of FIG. 2;
FIG. 4 is a view depicting another example of a drive current including recording pulses and high-frequency signals and of an NRZI waveform;
FIG. 5 is a view depicting another concrete configuration example of the laser modulation control circuit of FIG. 2;
FIGS. 6A, 6B are views depicting configuration examples of high-frequency overlap units that are principal parts of the invention;
FIGS. 7A, 7B are views depicting configuration examples of further embodiments of the high-frequency overlap units that are principal parts of the invention, and signal wave form examples of each unit;
FIGS. 8A, 8B are views depicting configuration examples of further embodiments of the high-frequency overlap units that are principal parts of the invention, and signal wave form examples of each unit;
FIG. 9 is a view depicting further examples of a drive current including recording pulses and high-frequency signals, an NRZI waveform, and channel data to be adopted by a device of the invention;
FIG. 10 is a view depicting a further example of the drive current including the recording pulses and the high-frequency signals, of the NRZI waveform, and of the channel data to be adopted by the device of the invention;
FIG. 11 is a view depicting a further example of the drive current including the recording pulse and the high-frequency signal and the NRZI waveform to be adopted by the device of the invention; and
FIG. 12 is a view depicting a further example of the drive current including the recording pulses and the high-frequency signals, of the NRZI waveform, and of the channel data to be adopted by the device of the invention.

Various embodiments according to the invention will be described hereinafter with reference to the accompanied drawings.

Hereinafter, embodiments of the invention will be set forth with reference to the drawings.
(Description to be a premise of the invention)

In the invention, a recording method for an optical disk is made on the assumption that a recording system, in which a sharp recording pulse having a recording pulse length that is shorter than 1 nanosecond is used to perform recording with smaller optical energy, is adopted. In such a recording system using a sub-nanopulse, since pulse emission of laser, in which an emission time of the laser is shorter than 10% (1%-10%) to a mark length, is performed, an averaged value of the power in recording of laser light may be lower than the power in reproducing.

Meanwhile, some materials of an optical disk as a recording medium may be low in difference in reflection rate between a mark part and a space part. Therefore, since an apparent contrast is improved, a recording medium, of which the reflection rate of the mark part or the space part is lowered up to an extent of 2% in a state where information recording is performed, has been developed.

Applying the recording method by means of a sub-nanopulse for information recording onto such a recording medium significantly reduces the averaged light quantity to be returned to a photo detector in an optical head in recording. Therefore, the signal quality of the detected signal extremely deteriorated, an operation (focus tracking servo) which obtains an error signal from the detected signal to fix an objective lens at a predetermined position in a recording layer may be impossible.

The inventor of this invention then intends to provide a recording and reproducing device of an optical disk configured to normally execute focus tracking servo while increasing the averaged light quantity by overlapping the high-frequency signals between the recording pulses and while recording by the sub-nanopulse.

The inventor focuses attention to a further problem as a result of the recording by the use of the sub-nanopulse. That is, when the high-frequency signal is overlapped between the recording pulses, unnecessary relaxation oscillation occurs to the semiconductor laser because there is a large difference between a voltage (or current) level of an edge of the recording pulse and a voltage (or current) level of the high-frequency signal which is successive to the voltage (or current) level of the edge of the recording pulse. The unnecessary relaxation oscillation poses unevenness of laser light, disturbances of recording mark and reproduction signal.

Further, in this invention, the high-frequency signals are multiplexed or overlapped on the space periods between recording pulses so as not to occur the unnecessary relaxation oscillation.
(Description of Representative Waveform Example Based on the Invention)

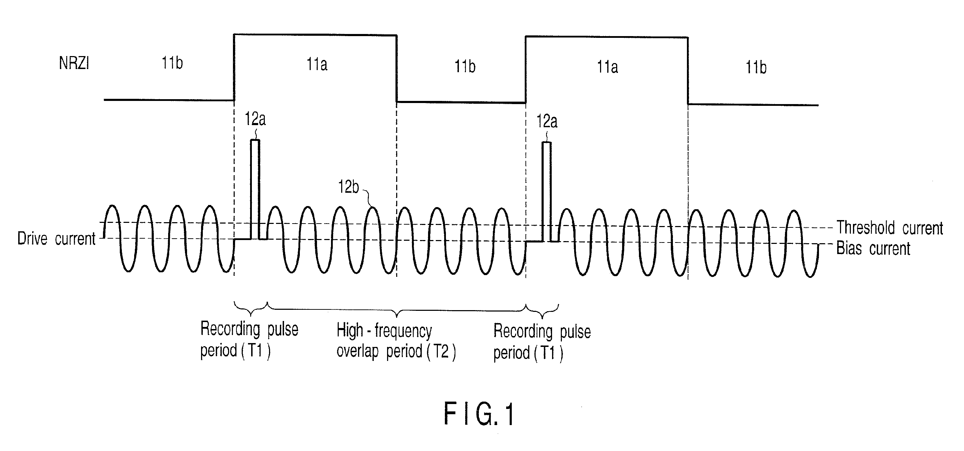

FIG. 1 explains a representative waveform example in recording. FIG. 1 shows data (NRZI) to be recorded and a drive current waveform of a laser diode (LD) corresponding to the data. The drive current includes a recording pulse period (T1) and a high-frequency signal overlap period (T2).

Recording pulse 12a is output one time or more than one time within a mark part 11a. In other than the recording pulse period (T1), high-frequency signals are output without any distinction of the mark part 11a and space part 11b. Thereby, the averaged light intensity of the laser diode is maintained.

The drive current in the recording pulse period (T1) makes the laser diode emitting light stronger than the light emission intensity in the high-frequency overlap period (T2). This strong light emission generates a thermal change in a recording layer of an optical disk and forms a recording mark. The drive current in the high-frequency signal overlap period (T2) has a current value to be intensity at an extend so that the averaged light quantity of the laser diode does not pose a thermal or a light change in the recording layer of the optical disk. This light intensity, in many cases, is the intensity in reading information from the recording layer of the optical disk. The level of a threshold current shown in FIG. 1, is a level to be a boundary for the laser diode to start or stop the light emission. To obtain the relaxation oscillation, the laser diodes needs a recording pulse which sharply varies from a level lower that this threshold current level. Therefore, for recording, it is needed to lower the current value than the threshold current once from the current value which obtains light intensity in reading the information from the recording layer of the optical disk and to obtain the recording pulse 12a which sharply varies. In a recording mode, the light intensity for reading the information from the optical disk needs the level capable of reading an address, etc.

A period to make the drive current constant as a bias current may be set between the recording pulse 12a and the high-frequency signal 12b.

As mentioned above, the recording by the use of the sub-nanopulse makes the laser diode bring into a state called relaxation oscillation to obtain light with high emission intensity. Thereby, after stopping the drive current after the generation of the recording pulse 12a, the laser diode maintains the light emission while reducing the light emission intensity. After the recoding pulse 12a, a bias period in which the drive current is constant is provided until the relaxation oscillation is dropped.
(Description of Information Recording and

Reproducing Device, or Optical Disk Drive, to which Invention is Applied)

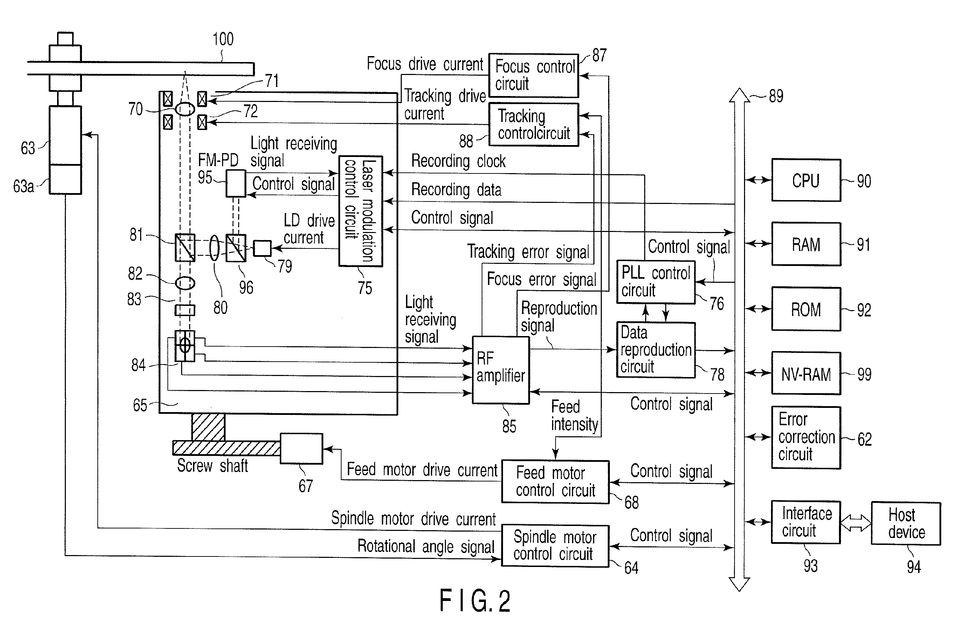

FIG. 2 shows an entire block diagram of an information recording and reproducing device to which the invention is applied. The information recording and reproducing device performs recording and reproducing the information for an optical disk 100 having a feature of the foregoing information recording medium (optical disc). On the optical disk 100, grooves are cut spirally or concentrically, recessed parts and the projected parts of the grooves are called lands and grooves, respectively, and one round of the groove or the land is called a track. Irradiation of the laser light, of which the intensity is modulated, along with the track (only groove or groove and land) and resulting in the forming of the recording marks produces the recording of user data. Irradiation of the laser light of read power with weaker intensity than that in recording, and detection of the change in reflected light intensity caused by the recording marks on the track produces the reproducing of the user data. Irradiation of the laser light with erasing power stronger than the reading power along with the track and crystallization of the recoding layer produces the erasing of the recorded data.

Rotational driving of the optical disk 100 is done by a spindle motor 63. A rotary encoder 63a disposed at the spindle motor 63 outputs a rotational angle signal. One rotation of the spindle motor 63 generates, for instance, five pulses of the rotational angle signal. A spindle motor control circuit 64 determines the rotational angle and the number of rotations of the spindle motor 63 on the basis of the rotational angle signal.

An optical head 65 records and reproduces the information in and from the optical disk 100. The optical head 65 is connected with a feed motor 67 via a gear and a screw shaft, and the feed motor 67 is controlled by a feed motor control circuit 68.
Rotation of the feed motor 67 by a feed motor drive current from the control circuit 68 shifts the optical head 65 in a radius direction of the optical disk 100.

The optical head is provided with an objective lens 70 supported by a wire or a blade spring (not shown). The objective lens 70 is driven with a drive coil 72 and enabled to move in a focusing direction (an optical axis direction of a lens), and driven with a drive coil 71 and enabled to move in a tracking direction (a direction orthogonal to an optical axis of a lens).

A laser modulation control circuit 75 provides a signal for writing to a laser diode (laser light emission device) 79 on the basis of recording data to be supplied from a host device 94 through an interface circuit 93 in recording information (in forming mark).

Laser light emitted from the laser diode 79 is incident to a half mirror 96. The half mirror 96 branches the laser light generated from the laser diode 79 by a constant rate.

A monitor photo detector (FM-PD) 95 composed of a photo diode receives partial light of the laser light from the half mirror 96. The photo detector 95 detects partial light which is commensurate with irradiation power of the laser light to supply a receiving light signal to the control circuit 75. The control circuit 75 controls the output light from the laser diode 79 so as to appropriately obtain in-reproducing laser power, in-recording laser power and in-erasing laser power which have been set by a central processing unit (CPU) 90, based on the light receiving signal at the monitor photo detector 95.

The laser diode 79 generates the laser light in response to the drive current supplied from the laser modulation control circuit 75. The laser light generated from the laser diode 79 is irradiated onto the optical disk 100 through a collimator lens 80, a half prism 81 and the objective lens 70. The reflected light from the optical disk 100 is guided to a reading photo detector 84 through the objective lens 70, the half prism 81, a light focus lens 82 and a cylindrical lens 83. The photo detector 84 is, for example, composed of photo detection cells divided into four, detection signals by the photo detection cells are output to an RF amplifier 85. The RF amplifier 85 processes signals from photo detection cells, and generates a focus error signal EF indicating an error from a focused focal point position, a tracking error signal TE indicating an error between a beam spot center of the laser light and a track center and a reproduction signal that is all added signals of photo detection cell signals.

The focus error signal FE is supplied to a focus control circuit 87. The control circuit 87 generates a focus drive signal in response to the focus error signal FE. The focus drive signal is supplied to a drive coil 71 for focusing. Thereby, focus servo, by which the laser light is always just focused on a recording film of the optical disk 100, is performed.

The tracking error signal TE is supplied to a tracking control circuit 88. The control circuit 88 generates a tracking drive signal in response to the tracking error signal TE. The tracking drive signal output from the control circuit 88 is supplied to a drive coil 72 for tracking. Thereby, the tracking servo, by which the laser light always traces the tracks formed on the optical disk 100, is performed.

With performing the foregoing focus servo and the tracking servo, all the added signals RF of output signals from the respective photo detection cells of the photo detector 84 are reflected by changes in reflection light from the recording marks, etc., formed on the tracks of the optical disk 100. The signals RF are supplied to a data reproduction circuit 78. The reproduction circuit 78 reproduces the recording data on the basis of a clock signal for reproduction from a PLL circuit 76.

When the objective lens 70 is controlled by the tracking control circuit 88, the feed motor 67, namely the optical head 65 are also controlled by the feed motor control circuit 68 so that the objective lens 70 is positioned near by a predetermined position in the optical head 65.

A CPU 90 controls the spindle motor control circuit 64, the feed motor control circuit 68, the laser modulation control circuit 75, the PLL circuit 76, the data reproduction circuit 78, the focus control circuit 87, the tracking control circuit 88, an error correction circuit 62, etc., through a signal bus 89.

The CPU 90 comprehensively controls the recording and reproducing device in accordance with an operation command provided from the host device 94 through the interface circuit 93. The CPU 90 uses a RAM 91 as a working area, appropriately refers to a parameter for each device unity recorded on a non-volatile memory (NV-RAM) 99, and conducts a predetermined operation in accordance with a control program recorded on a ROM 92. The error correction circuit 62 conducts error correction of a reproduced signal.
(Description of Laser Modulation Control Circuit 75 Achieving Waveform in FIG. 1)

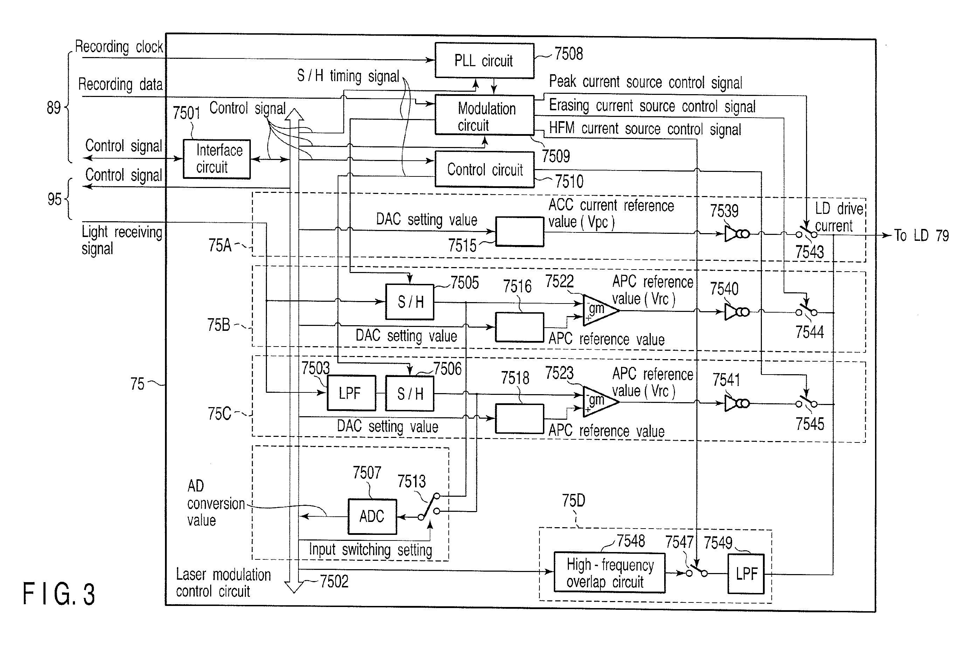

FIG. 3 shows a block diagram illustrating a configuration example of the laser modulation control circuit 75. This laser modulation control circuit 75 may be mainly classified into three units, namely a waveform generation unit, an APC computing circuit and a control unit. The waveform generation unit is a unit which generates a recording waveform from a recording clock and recording data and switches current sources corresponding to the recording waveform. The APC computing unit is a unit which controls a current toward the laser diode 79 so as to become irradiation power instructed from the CPU 90 in recording and in reproducing. The control unit is a unit which analyzes the control signal from the signal bus 89 to perform the control of the laser modulation control circuit 75.

With classifying in other functional blocks, the control circuit 75 may be classified into a recording pulse output unit 75A, a bias current output unit 75B to output a constant bias current between the recording pulses, a current output unit for reproduction 75C to obtain constant irradiation power in reproducing, and a high-frequency overlap unit 75D to overlap a high-frequency signal on the constant bias current between the recording pulses. The overlap unit 75D is controlled so that the current values at a start edge and at an end edge of the high-frequency signal coincide with the constant bias current value (this function will be described in detail later). A current output unit for erasing to obtain erasing power may be disposed. The bias current output unit 75B may use the current output unit for reproduction both as the current output unit for erasing.

The APC computing unit is incidental to the current output unit 75C and the current output unit 75B. In reproducing, the light receiving signal from the monitor photo detector 95 is input and sampled to a sample hold circuit (S/H) 7506 for maintaining a start of reproduction via a LPF 7503 for eliminating a noise. Meanwhile, reading irradiation power information included in the control signal to be input from the CPU 90 by way of the signal bus 89 is set in a reading APC reference generation circuit 7518. A comparison amplifier 7523 compares between the sample value from the S/H circuit 7506 and the reading irradiation power information (APC reference value) from a reading APC reference generation circuit 7518, and controls a current source 7541 in accordance with the difference. Thereby, the drive current of the laser diode is controlled, and the emission intensity is controlled so as to coincide with the set reading irradiation power. A switch for reading 7545 is mainly turned on in reproducing.

In recording, the light receiving signal from the monitor photo detector 95 at the space part (refer to FIG. 1) is taken into a sample hold circuit (S/H) 7505. Meanwhile, space part irradiation power information included in the control signal is set from the CPU 90 to a bias APC reference generation circuit 7516 via the signal bus 89. A comparison amplifier 7522 compares between the sample value from the sample hold circuit 7505 and the space part irradiation power information (APC reference value) from the bias APC reference generation circuit 7516, and controls a current source 7540 in accordance with the difference. Thereby, the drive current of the laser diode is controlled, and the light emission intensity is controlled so as to coincide with the space part irradiation power. A switch for a space 7545 is turned on at the period between the recording pulses.

At this moment, due to low-pass filter effect caused by band restriction of the photo detector 95, a waveform in which the high-frequency overlap is averaged is input to the sample hold circuit 7505.

Other than a method by means of the comparison amplifier 7523 in the modulation control circuit 75, the APC computing is performed by a method of computing in the CPU 90. In such a case, the CPU 90 changes over the output from the sample hold circuit 7505 or the sample hold circuit 7506 by means of a input changeover switch 7513 to an A-D converter 7507 for analog-digital conversion, acquires the conversion information through an internal bus 7502 and the signal bus 89, and computes a laser diode drive current by computing. The computed laser diode drive current value is set to s bias APC reference generation circuit 7516 or the APC reference generation circuit 7518, and is transferred to the current source 7540 or a current source 7541 without passing through the comparison amplifiers 7522 or 7523.

The waveform generation unit consists of a PLL circuit 7508, a modulation circuit 7509 and a high-frequency overlap circuit 7548. The PLL circuit 7508 receives the recording clock to generate a timing signal necessary for a modulation circuit 7509. The modulation circuit 7509 analyzes the recording data to generate the recording waveform in accordance with the control signal set by the internal bus 7502, and decomposes current source control signals indicating on/off of each current source. The current source control signals are each supplied to switches 7543, 7545, with turning on/off each current source output in accordance with the current source control signals, the strength and weakness of the laser diode drive current may occur, and intensity modulation of the irradiation power in recording may be achieved. The switch 7545 is a switch of a current source which mainly turns on only in reproduction and a control circuit 7510 turns on/off by a recording and reproducing changeover signal included in the control signal from the signal bus 89.

The high-frequency overlap circuit 7548 outputs a sine wave with amplitude and a frequency to be decided by the control signal set by the internal bus 7502 within a range almost from 100 MHz to 4 GHz. The switch 7547 controlled by the modulation circuit 7509 controls the output current from the high-frequency overlap circuit 7548 and intermittently overlaps the high-frequency currents as shown in FIG. 1.
(Other Embodiment: Drop Bias Current Value before Pulse Emission)

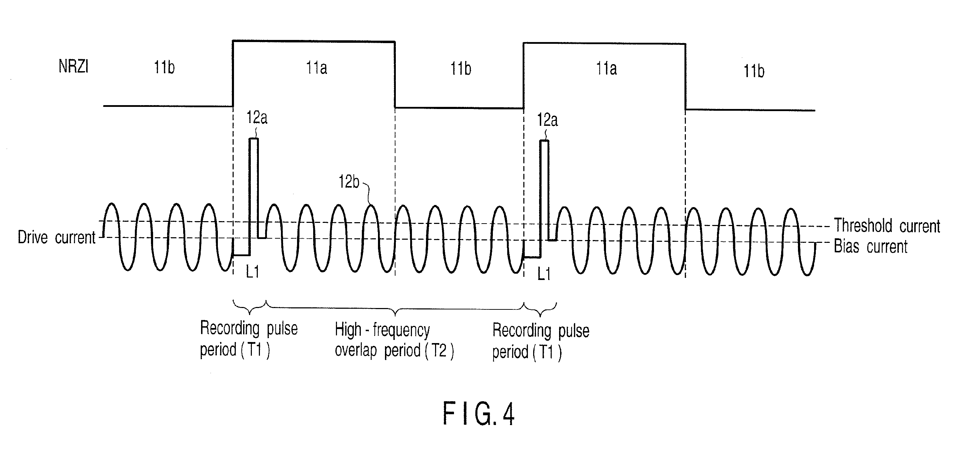

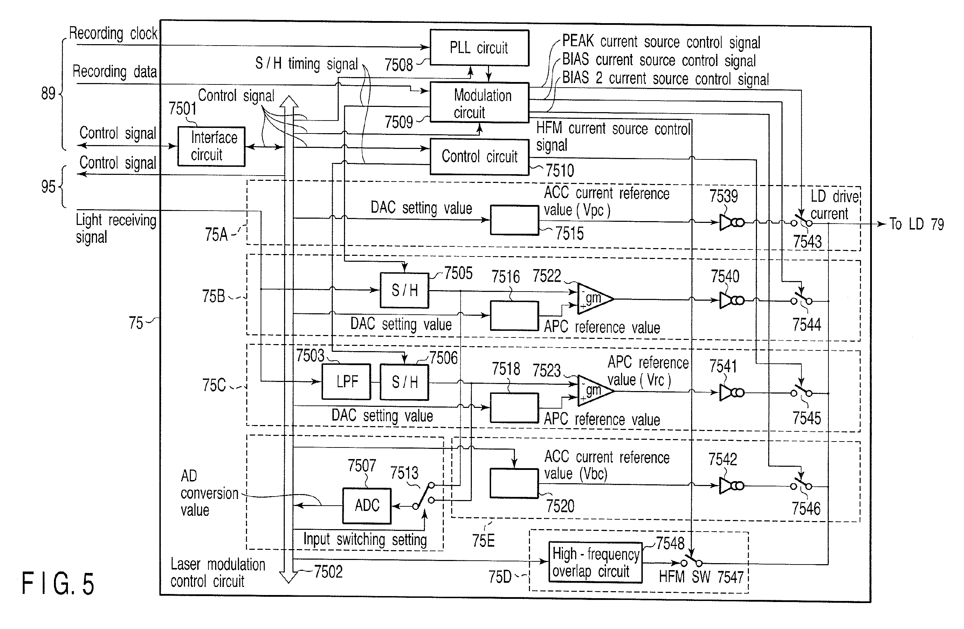

The present invention is not limited to the foregoing embodiments. To make the laser diode generate further strong relaxation oscillation, a method which supplies a current waveform to be a further lower current value (L1) before a peak pulse as shown in FIG. 4 to the laser diode 79 is also preferable. In this case, the laser modulation control circuit 75 is configured as shown in FIG. 5. The same components as those of the circuit of FIG. 3 are designated by the identical symbols and the descriptions thereof will be eliminated. The configuration in FIG. 5 is only differs from that of FIG. 3 in that includes a bias reference generation circuit 7520, a current source 7542 and a switch 7546. The CPU 90 supplies current reference value information to the bias reference generation circuit 7520 by way of the signal bus 89. The output current value from the current source 7546 is decided on the basis of the current reference information to be output via the switch 7546. Thereby, the current value (L1) with further lower value may be obtained before the peak pulse shown in FIG. 4.

A configuration in which either the current source 7540 or the current source 7541 substitutes for the current source 7542 is a possible approach. The lower current value (L1) to be output to the laser diode 79 before the peak pulse includes a zero value or minus value in a range in which the laser diode 79 is not broken.

To generate the relaxation oscillation, it is needed to drop the supply current to the laser diode to I-th (a supply current value in starting light emission of the laser diode) just before the light emission of the laser diode. To generate the relaxation oscillation light emission, it is needed for a time period to be dropped not higher than the I-th to be at least 0.5 nanosecond and preferably at least 3.0 nanoseconds. As a result of further experimental evaluation, if the period is not shorter than 10 nanoseconds, significantly stable relaxation oscillation light emission may be generated.
(Concrete Configuration Example 1 of High-Frequency Overlap Unit 75D)

A high-frequency overlap unit 75D is composed of, for example, the high-frequency overlap circuit 7548, the switch 7547, and a low-pass filter (LPF) 7549.
When switching the output current from the overlap circuit 7548 to an asynchronous state with its cycle, a waveform, in which a part of a sine wave is dropped out, is output. According to some conditions, there is the possibility that the output of such a waveform makes emission light from the laser diode 79 generate unnecessary relaxation oscillation.

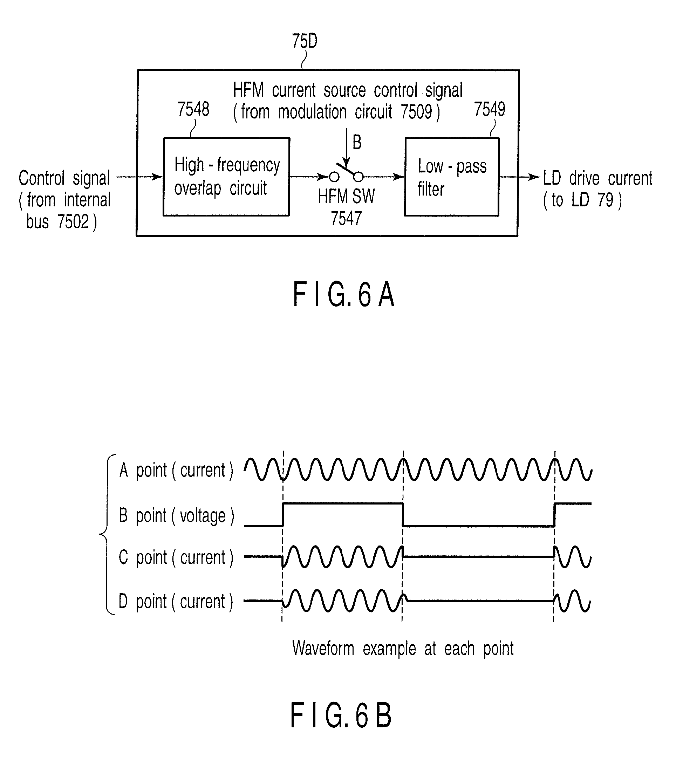

To avoid this possibility, the overlap unit 75D is configured, for example, as shown in FIGS. 6A-8B. In FIG. 6A, to suppress unnecessary relaxation oscillation caused by asynchronous switching with a high-frequency overlap wave, a low-pass filer (or a band-pass filter) 7549 is disposed on an output side of the switch 7547, and smoothes the part in which a waveform of a high-frequency signal is dropped out. In this case, the low-pass filter (or band-pass filter) 7549 to be used is configured so as not to affect on a rise time and trailing time of pulses generated from other switches 7543, 7544, 7545, 7546 connected in parallel. A Signal at each of A point - D point is shown in FIG. 6B. A high-frequency signal is output from the high-frequency overlap circuit 7548. The high-frequency signal is turned on and off by the switch 7547; however, it is not limited to be always turned on and off at a zero-cross point. If a current at the C point is used as it is as the drive current for the laser diode 79, the laser diode79 generates unnecessary relaxation oscillation at a part at which a current is sharply varies. To generate a current (current at the D point) in which a sharply varied part of the current is smoothed, the low-pass filter 7549 is used.
(Concrete Configuration Example 2 of High-Frequency Overlap Unit 75D)

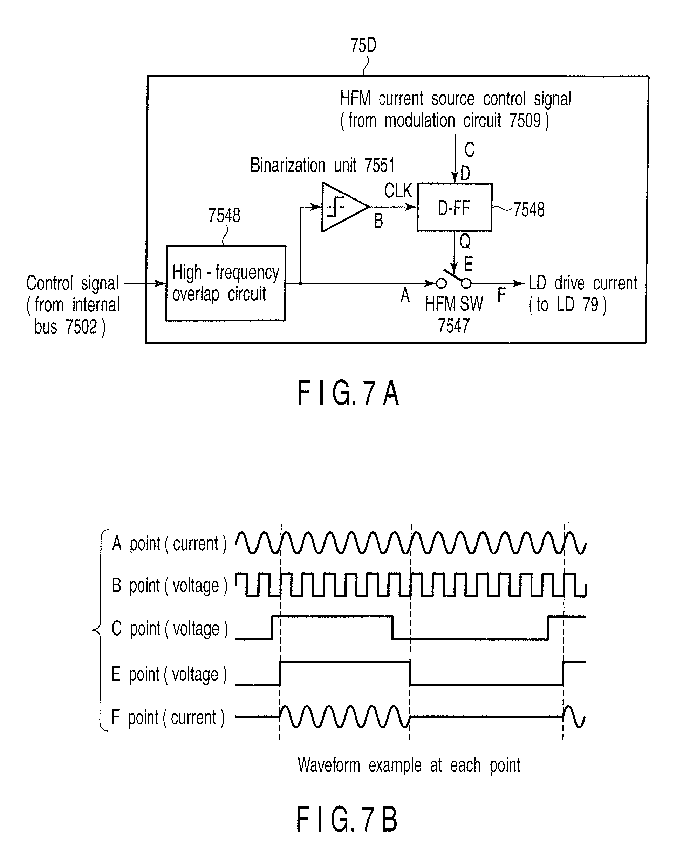

As shown in FIG. 7A, the outputs from the high-frequency overlap circuit 7548 are supplied to a binarization circuit 7551 and a switch 7547. The output from the binarization circuit 7551 (zero-cross detection circuit) is supplied to a clock input terminal of a D flip-flop circuit 7550, and a switch on/off control signal is input to a data input terminal of the D flip-flop circuit 7550. The output from the D flip-flop circuit 7550 is output in synchronization with the output timing of the binarization circuit 7551 and applies on/off control to the switch 7547.

Signals at each of A point - C point, E point, F point are shown as FIG. 7B, the high-frequency signal to be supplied to the laser diode is applied the on/off control at the zero-cross point. The control signal to be output from the modulation circuit 7509 is synchronized with the high-frequency signal.

According to such a configuration, even if the switch control signal is output asynchronously with the cycle of the output current from the overlap circuit 7548, the switching of the switch 7547 is delayed until the arrival of the next zero-cross point. Thereby, the output of the waveform, in which a part of a sine wave that generates an unnecessary transitional signal, is suppressed.

In this configuration, to stop the high-frequency overlap, it is needed to set the switching timing of the control signal from the modulation circuit 7509 earlier than a half cycle of the high-frequency signal of the timing at which the output of the high-frequency overlap is really desired to be stopped. To synchronize the switching timing of the switch 7547 at both the passing through of the zero-cross point from the upper side to the lower side and form the lower side to the upper side with each other, it is needed to set the switching timing of the control signal from the modulation circuit 7509 earlier than 1/4 cycle of the high-frequency signal of the timing at which the output of the high-frequency overlap is desired to be stopped.
(Concrete Configuration Example 3 of High-Frequency Overlap Unit 75D)

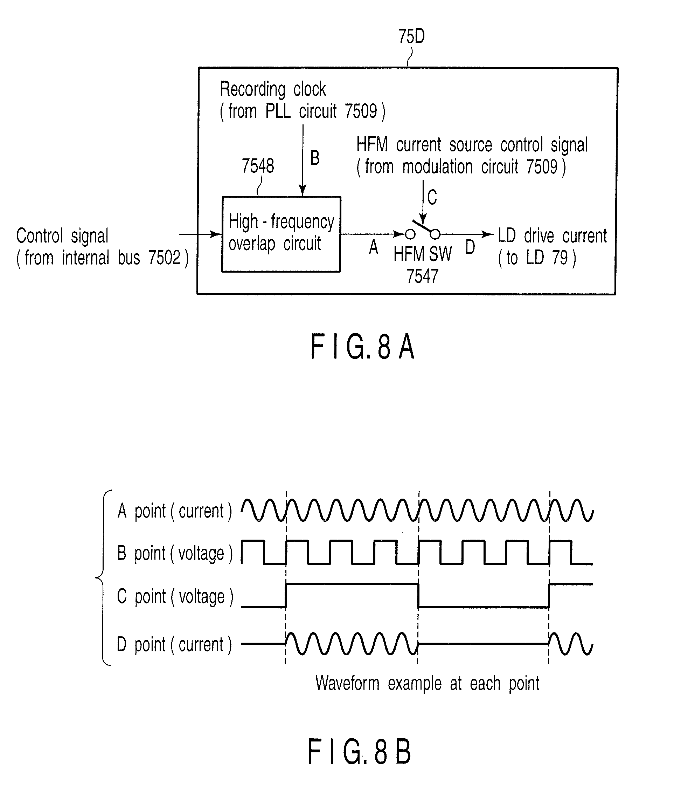

As shown in FIG. 8A, the sine wave at the high-frequency overlap circuit 7548 is synchronized with the recording clock. That is, the overlap unit 75D generates the sine wave by multiplying and frequency-dividing of the recording clock. Thereby, by controlling the switch 7547 with the control signal from the modulation circuit 7509 which is synchronized with the recording clock by the operation of the PLL circuit 7508 similarly, the switching timing is synchronized with the sine wave to be output from the overlap circuit 7548. Without especially disposing a filter or a zero-cross detection circuit, the overlap unit 75D may obtain the switching of the switch 7547 as the zero-cross point of the high-frequency current to be output from the high-frequency overlap circuit 7548. FIG. 8B shows each of the A point - D point signals. According to this configuration, since the switch 7547 switches the output current from the overlap circuit 7548 in synchronization with the cycle of the output current, the output of the waveform in which a part of a sine wave is dropped out is avoided.

According to the aforementioned configuration, since the averaged light quantity may be increased by filling up the interval between the recording pulses with the high-frequency overlap waves, a recording and reproducing device of an optical disk may be configured to normally execute focus tracking servo while recording by the sub-nanopulse.

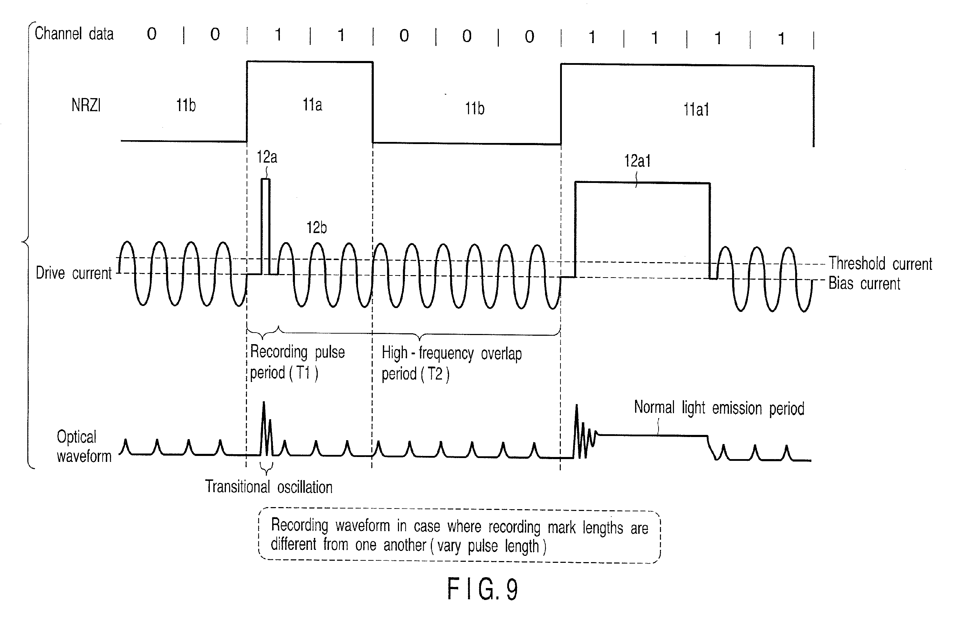

To make the description given above clearly understandable, one kind of the relation between the drive current of the laser diode 79 and the NRZI waveform is shown in FIG. 1. However, as regards the NRZI waveform may be used various waveforms in response to the channel data. In accordance with the NRZI waveforms, the recording pulses for effectively forming the mark parts and space parts on the recording medium are generated. Hereinafter, various recording pulse patterns will be shown in FIGS. 9-12, and also the characteristic of the relaxation oscillation generated by the laser diode 79 will be described.

FIG. 9 shows the channel data and the NRZI waveform to be created on the basis of the channel data. FIG. 9 also shows an example of the drive current of the laser diode and the photo waveform to be output from the laser diode 79.

The example shown in FIG. 9 is one in which the recording is performed by controlling the lengths of the recording pulses (pulse widths) in proportion to the lengths of recording mark parts in recording the mark parts differing in length from one another. FIG. 9 shows the examples of the channel data that is the data desired to be recorded, and the NRZI waveform, the drive current waveform, a photo waveform to be assumed corresponding to the channel data.

If the length of channel bit of N continuous "1" is set to NT, the lengths of the recording pulses 12a, 12a1, are almost shorter than (N-2) + 0.1 T or (N-3) + 0.1. Wherein, T represents a one channel bit length of a reference clock.

Since the length of one cycle of the relaxation oscillation is a range almost from 100 picoseconds to 1 nanosecond, if a 0.05 T (around 750 picoseconds) recording pulse is imparted at a channel clock frequency 64.8 MHz (1T is around 15 nanoseconds), relaxation oscillation composed of around one or two waves is obtained. In the case of a recording mark part with a short length (2T or 3T), the data may be recorded only by this relaxation oscillation.

In contrast, in the case of a longer recording mark part, the relaxation oscillation becomes an orderly state and the laser diode 79 brings itself into a continuous oscillation state. In this case, the information recording and reproducing device records the data by combining the recording through the relaxation oscillation and the recording through the normal laser light emission. Just after imparting the current pulse, the device records the data through the relaxation oscillation, after the relaxation oscillation the device becomes the orderly state, and the device records the data through the normal light emission.

The level of the threshold current shown in FIG. 9 is one that becomes the boundary at which the laser diode 79 starts its light emission or stops its light emission. To obtain the relaxation oscillation, the laser diode 79 needs the recording pulse of which the level sharply varies from the level not higher than the threshold current level. It is preferable for the time period for maintaining the level which is lower than the threshold current level to be maintained for one to five nanoseconds. Thus, if the recording processing is performed in the middle of the output of the drive current not lower than the threshold position for reading or erasing addresses, it is required to include a means for generating the recording pulse which lowers once to the level not higher than the threshold and sharply raises the level. This means is actualized in a manner that the output from the modulation circuit 7509 and the output from the control circuit 7510 shown in FIGS. 3, 5 control the switches 7545-7546 and the current source 7540-7542.

The relations shown in FIGS. 9-12 show as if the sections of channel bits and the high-frequency overlapping are synchronized with one another, there is no need that they are always synchronized with one another as mentioned above.

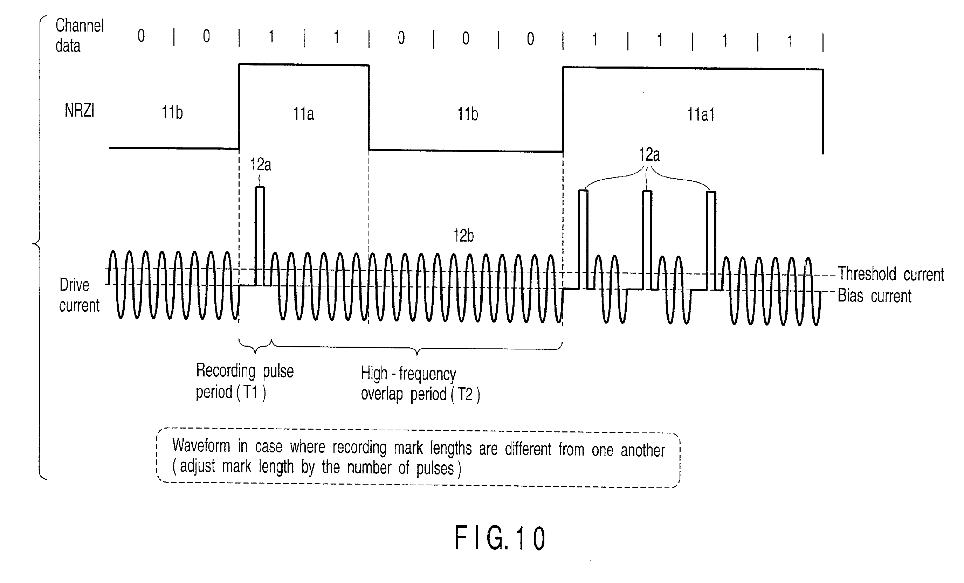

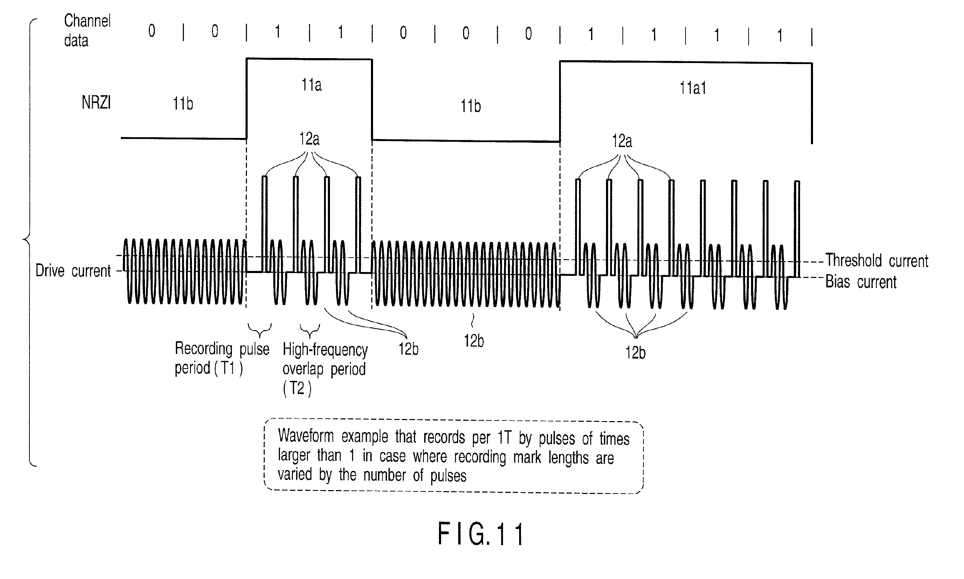

FIG. 10 shows an example in which the recording is performed by increasing the number of times of generations of the recording pulses in proportion to the length of the mark parts. If the length of the channel bit including N continuous "1" is set to NT, the number of times of the recording pulses is expressed by 'M ×(N-J) + K'. Where M is a natural number and J, K are integers. Therefore, a waveform with M=2, J=K=0 as shown in FIG. 11 is a possible approach. Inserting a high-frequency overlap wave between the recording pulses increases the averaged light quantity during recording. This inserting enables the recording of the data by the averaged drive current less than the example of FIG. 9 with repeating high peak pulses caused from the relaxation oscillation.

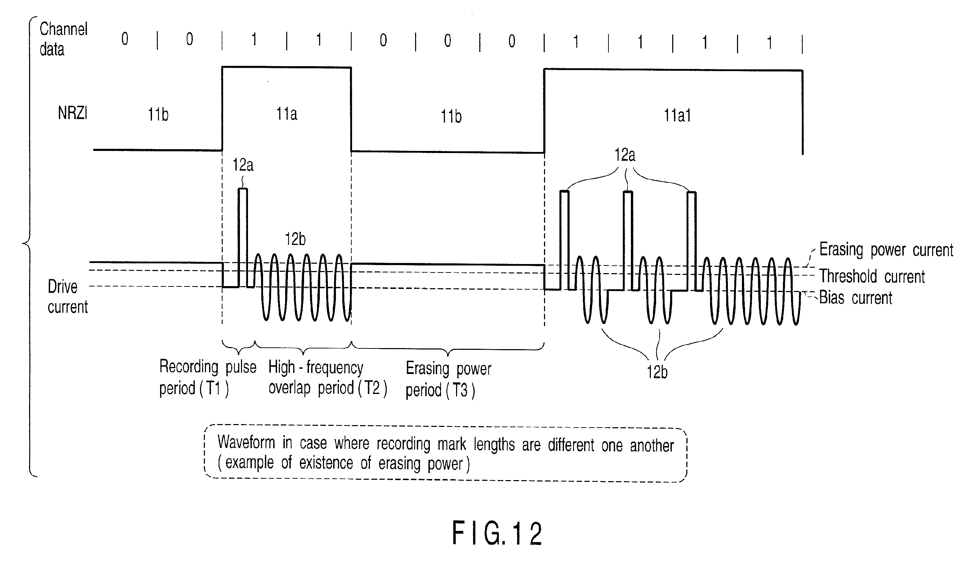

FIG. 12 shows a case in which erasing power is irradiated instead of the high-frequency overlap in the space part in FIG. 10, and shows a recording waveform which is suitable for a rewritable medium. Also in examples of FIGS. 9-11, similarly to that of the FIG. 12, it goes without saying that a modification to irradiate erasing power in the space part is applicable.

The foregoing embodiment has a feature as a control method of a laser control circuit. That is, in a laser modulation control method in a laser modulation control circuit supplying the drive current with the recording pulse overlapped thereon to the laser diode, the relaxation oscillation is generated in the laser diode as the pulse for recording and outputs the recording pulses. The control method outputs the constant bias current between the recording pulses, and the bias current has a value lower than the threshold current at the start of the light emission from the laser diode. The device overlaps the high-frequency signal on the constant bias current between the recording pulses, and executes the start edge and the end edge of the high-frequency signal at the zero-cross point of the high-frequency signal.

The laser out put control method given above has a feature such that the pulse length of the recording pulse after raising may be varied (extended, reduced) in response to the mark part length to be formed on the recording medium. Further, it is a feature that the recording pulses have constant pulse widths and the number of the recording pulses is controlled in response to the mark lengths to be formed on the recording medium. Further, it is also a feature that an erasing power current is overlapped on the bias current in the space part between the mark parts to be formed on the recording medium.

According to the foregoing device and method, a sharp current change does not occur when the overlapping of the high-frequency signal is started or terminated between the recording pulses. Accordingly, unnecessary relaxation oscillation does not occur in the laser diode, and the occurrence of a noise is prevented.

## Claims

1. A laser output control device including a laser modulation control circuit which supplies a drive current with recording pulses overlapped thereon to a laser diode, the laser modulation control circuit **characterized by** comprising:
a recording pulse outputting unit (75A) which outputs recording pulses for making the laser diode generate relaxation oscillation as the recording pulses;
a bias current output unit (75B) which outputs a constant bias current between the recording pulses; and
a high-frequency overlap unit (75D) which overlaps a high-frequency signal on the constant bias current between the recording pulses.

2. The device according to claim 1, **characterized in that**
the high-frequency overlap unit (75D) executes a start edge and an end edge of overlapping of the high-frequency signal at a zero-cross point of the high-frequency signal.

3. The device according to claim 1 or 2,
**characterized in that**
the high-frequency signal to be output from a high-frequency overlap circuit of the high-frequency overlap unit (75D) is synchronized with a recording clock, and
the high-frequency overlap unit (75D) includes means for controlling time points at a start edge and an end edge of the high-frequency signal by a signal synchronized with the recording clock.

4. The device according to claim 1 or 2,
**characterized in that**
the high-frequency overlap unit (75D) comprises:
zero-cross point determination means for the high-frequency signal to be output from the high-frequency overlap circuit; and
means for controlling overlap of the high-frequency signal in response to a determination result from the zero-cross point determination means.

5. The device according to claim 1 or 2,
**characterized in that**
the high-frequency overlap unit (75D) includes a band-limiting filter which smoothes on and off positions of the high-frequency signal to be output from a high-frequency overlap circuit.

6. An information recording and reproducing device including a laser modulation control circuit in which an optical head records and reproduces information in and from an optical disk and supplies a drive current with recording pulses overlapped thereon to a laser diode, the laser modulation control circuit **characterized by** comprising:
a recording pulse outputting unit (75A) which outputs recording pulses for making the laser diode generate relaxation oscillation as the recording pulses;
a bias current output unit (75B) which outputs a constant bias current between the recording pulses; and
a high-frequency overlap unit (75D) which overlaps a high-frequency signal on the constant bias current between the recording pulses.

7. The device according to claim 6, **characterized in that**
the high-frequency overlap unit (75D) executes a start edge and an end edge of overlapping of the high-frequency signal at a zero-cross point of the high-frequency signal.

8. The device according to claim 6, **characterized in that**
the high-frequency signal to be output from a high-frequency overlap circuit of the high-frequency overlap unit (75D) is synchronized with a recording clock, and
the high-frequency overlap unit (75D) includes means for controlling time points of a start edge and an end edge of the high-frequency signal by a signal synchronized with the recording clock.

9. The device according to claim 6, **characterized in that**
the high-frequency overlap unit (75D) comprises:
zero-cross point determination means for the high-frequency signal to be output from the high-frequency overlap circuit; and
means for controlling overlap of the high-frequency signal in response to a determination result from the zero-cross point determination means.

10. The device according to claim 6,
**characterized in that**
the high-frequency overlap unit (75D) includes a band-limiting filter which smoothes on and off positions of the high-frequency signal to be output from a high-frequency overlap circuit.

11. A laser modulation control method in a laser modulation control circuit which supplies a drive current with recoding pulses overlapped thereon to a laser diode, **characterized by** comprising
making the laser diode generate relaxation oscillation as the recording pulses and outputting the recording pulses;
outputting a constant bias current between the recording pulses;
setting the constant bias current to a value lower than a threshold current at a start of light emission from the laser diode; and
overlapping a high-frequency signal on the constant bias current between the recording pulses.

12. The method according to claim 11, **characterized by** further comprising:
executing a start edge and an end edge of overlap of the high-frequency signal at zero-cross points of the high-frequency signal.

13. The method according to claim 11,
**characterized in that**
the recording pulses are varied in the pulse length after raising in response to mark lengths to be formed on a recording medium.

14. The method according to claim 11,
**characterized in that**
the recording pulses have constant pulse widths and are controlled in the number of pulses in response to mark lengths to be formed on a recording medium.

15. The method according to claim 11, **characterized by** further comprising:
overlapping an erasing power current on the constant bias current in a space part between mark parts to be formed on a recording medium.
